# EUROPEAN PATENT APPLICATION

(11) **EP 3 705 336 A1**
(43) Date of publication of application: **09.09.2020**
(21) Application number: 17930170.0
(22) Date of filing: 26.12.2017

(54) **RAIL TRAFFIC HYBRID POWER CIRCUIT, ENERGY STORAGE POWER PACK, AND POWER SUPPLY METHOD THEREFOR**

(30) Priority: 03.11.2017 CN 201711068027
(71) Applicant: CRRC Zhuzhou Locomotive Co., Ltd, Zhuzhou, Hunan 412001 (CN)
(72) Inventor: FAN, Yunxin, Zhuzhou Hunan 412001 (CN); WANG, Wei, Zhuzhou Hunan 412001 (CN); LONG, Yuan, Zhuzhou Hunan 412001 (CN); HUANG, Hai, Zhuzhou Hunan 412001 (CN); GUO, Wanlu, Zhuzhou Hunan 412001 (CN); CHEN, Shengcai, Zhuzhou Hunan 412001 (CN); FU, Jin, Zhuzhou Hunan 412001 (CN); LI, Xianling, Zhuzhou Hunan 412001 (CN)
(74) Representative: Ran, Handong
(86) International application number: PCT/CN2017/118476
(87) International publication number: WO 2019/085228

(57) **Abstract**

Disclosed are a rail transit hybrid power circuit, an energy storage power pack and a power supply method thereof. The rail transit hybrid power circuit comprises a lithium battery and a grid branch; the lithium battery is connected to a super-capacitor through a boost/buck module; an output end of the super-capacitor is connected to a charging branch and a first contactor; the first contactor and the charging branch are both connected to a load; and the grid branch is connected to the load through a second contactor. The power-type super-capacitor is combined with the energy-type lithium battery, the lithium battery is combined with the super-capacitor through the DC/DC converter, and the DC/DC converter realizes the transmission of energy between the lithium battery and the super-capacitor by means of boosting and bucking, so that the characteristics of high energy density of the lithium battery and high power density of the super-capacitor are fully utilized, and the locomotive can still exert high-power traction when passing through a region having no electricity, and can absorb and reuse regenerative braking energy at run time to achieve the purposes of energy conservation and environmental protection.

## Description

### Field of the Invention

The present invention relates to the field of rail transit power drive, in particular to a rail transit hybrid power circuit, an energy storage power pack and a power supply method thereof.

### Background of the Invention

The existing rail transit vehicle receiving current from a grid cannot exert traction when passing through a region having no electricity, the emission of exhaust gas generated after the internal combustion-driven rail transit vehicle enters a tunnel, may cause dangerous consequences, while the hybrid power driving method using an on-board energy storage power pack can effectively improve the operating efficiency of a locomotive and reduce the exhaust emission of the locomotive in the tunnel and even in the entire track section. At present, the main energy storage elements include storage batteries, super-capacitors, etc. The batteries include lead acid batteries, alkaline batteries, lithium batteries, etc. Power batteries are generally the lithium batteries with relatively large energy density and power density. Super-capacitors are a new type of capacitors, with large power density. Although the lithium batteries have been widely used in pure electric vehicles and hybrid vehicles, the high-current charge and discharge have adverse effects on the life and efficiency of the lithium batteries. Although the super-capacitors can be quickly charged and discharged at high power, the super-capacitors have low energy density and cannot complete tasks as on-board energy storage elements alone. Therefore, how to combine super-capacitors and batteries is a problem to be solved in the field of rail transit power drive.

### Summary of the Invention

The technical problem to be solved by the present invention is to provide a rail transit hybrid power circuit, an energy storage power pack and a power supply method thereof in response to the shortcomings of the prior art, where the characteristics of high energy density of a lithium battery and high power density of a super-capacitor are fully utilized, so that a locomotive can still exert high-power traction when passing through a region having no electricity, and can absorb and reuse regenerative braking energy at run time.

In order to solve the above technical problems, the technical solution adopted by the present invention is: A rail transit hybrid power circuit, including a lithium battery and a grid branch; the lithium battery is connected to a super-capacitor through a boost/buck module; an output end of the super-capacitor is connected to a charging branch and a first contactor; the first contactor and the charging branch are both connected to a load; and the grid branch is connected to the load through a second contactor.

With the above structure, the power-type super-capacitor and the energy-type lithium battery are combined to fully utilize the characteristics of high energy density of the lithium battery and high power density of the super-capacitor.

The grid branch includes a grid; the grid is connected to a rectifier through a main transformer; the rectifier is connected to the second contactor; the load includes a traction converter and a traction motor connected in series; the second contactor is connected to the traction converter through a high-speed circuit breaker; and an output side of the first contactor is connected between the second contactor and the high-speed circuit breaker.

The second contactor is connected to the rectifier through a diode. The diode functions to ensure that the grid branch is turned on forward, so that the regenerative braking energy is absorbed by an energy storage power pack.

The charging branch includes a third contactor; the third contactor is connected to a charger; the charger is connected to an auxiliary inverter; and an output end of the auxiliary inverter is connected between an output side of the high-speed circuit breaker and the traction converter. The charging branch can charge the energy storage power pack.

In the present invention, the boost/buck module is a DC/DC converter, with low cost.

The super-capacitor is connected to the charging branch and the first contactor through a DC bus, can quickly respond to the power demand of a locomotive, for example, immediately absorb energy fed back during regenerative braking of the locomotive and release the energy in next traction stage of the locomotive, so that the energy of regenerative braking can be efficiently recycled, and also plays a role in stabilizing the voltage of the DC bus.

Correspondingly, the present invention also provides an energy storage power pack, including a lithium battery, wherein the lithium battery is connected to a super-capacitor through a DC/DC converter.

As an inventive concept, the present invention also provides a power supply method for the rail transit hybrid power circuit, including a grid mode and an energy storage power pack mode:
in the grid mode: grid current enters a locomotive intermediate DC circuit through the main transformer and a rectifier, the second contactor and a high-speed circuit breaker are closed, the first contactor is opened, the grid current is inverted by a traction converter into three-phase alternating current, and the alternating current is supplied to a traction motor; at the same time, a third contactor is closed, an auxiliary inverter charges an energy storage power pack through a charger, the auxiliary inverter supplies power to each auxiliary load, the charger charges the super-capacitor, and the super-capacitor charges the lithium battery through a DC/DC converter; and when the locomotive is in a regenerative braking state, the feedback energy generated by the traction motor is charged to the energy storage power pack through the traction converter, the auxiliary inverter and the charger, and the feedback energy is supplied to the auxiliary loads through the auxiliary inverter;
in the energy storage power pack mode: the first contactor is closed, the second contactor and the third contactor are opened, the high-speed circuit breaker is closed, and the energy storage power pack supplies power to the traction converter through the high-speed circuit breaker, and supplies power to the auxiliary inverter at the same time; when the locomotive is driven by low power (less than 100 kw), only the lithium battery outputs energy, and the super-capacitor is used to stabilize the voltage of a DC bus; when the power of the locomotive increases, the super-capacitor and the lithium battery are discharged together; and when the locomotive is in the regenerative braking state, the feedback energy generated by the traction motor is charged to the energy storage power pack through the traction converter, the auxiliary inverter and the charger, and the feedback energy is supplied to the auxiliary loads through the auxiliary inverter.

Compared with the prior art, the present invention has the following beneficial effects: the power-type super-capacitor is combined with the energy-type lithium battery, the lithium battery is combined with the super-capacitor through the DC/DC converter, and the DC/DC converter realizes the transmission of energy between the lithium battery and the super-capacitor by means of boosting and bucking, so that the characteristics of high energy density of the lithium battery and high power density of the super-capacitor are fully utilized; and the super-capacitor directly connected to the DC bus can quickly respond to the power demand of the locomotive and stabilize the voltage of the DC bus. The circuit of the present invention enables the locomotive to operate in two power supply modes of the grid and the energy storage power pack, so that the locomotive can still exert high-power traction when passing through a region having no electricity, and can absorb and reuse regenerative braking energy at run time to achieve the purposes of energy conservation and environmental protection.

### Brief Description of the Drawing

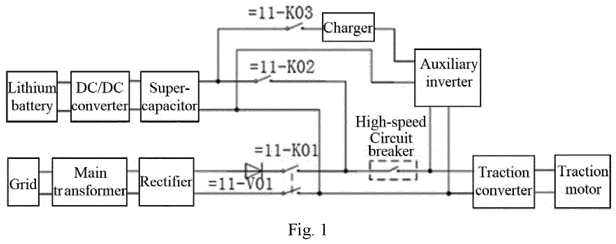

Fig. 1 is a structural diagram of a hybrid power circuit according to the present invention.

### Detailed Description of Embodiments

A hybrid power circuit according to the present invention is shown in Fig. 1. The circuit is mainly composed of a lithium battery, a DC/DC converter, a super-capacitor, a main transformer, a rectifier, a high-speed circuit breaker, a traction converter, a traction motor, an auxiliary inverter, a charger, contactors =11-K01 (second contactor), =11-K02 (first contactor) and =11-K03 (third contactor), and an anti-reverse diode (=11-KV01).

Due to the large difference in output voltage between the lithium battery and the super-capacitor, the lithium battery is combined with the super-capacitor through the DC/DC converter. The DC/DC converter is, in principle, a Buck-Boost circuit. The DC/DC converter is controlled to be in a boost or buck mode so as to realize the transmission of energy between the lithium battery and the super-capacitor. The super-capacitor is directly connected to a DC bus, can quickly respond to the power demand of the locomotive, for example, immediately absorb energy fed back during regenerative braking of the locomotive and release the energy in the next traction stage of the locomotive, so that the energy of regenerative braking can be efficiently recycled, and also plays a role in stabilizing the voltage of the DC bus. When the locomotive is driven by high power or the energy of the super-capacitor is exhausted/full, the lithium battery supplements or absorbs energy to/from the super-capacitor through the DC/DC converter, so the large energy density of the lithium battery ensures that the locomotive has sufficient endurance mileage, and prevents the lithium battery from directly charging and discharging the DC bus to affect its service life. The DC/DC converter is used for managing the energy and power of an energy storage power pack and adjusting the energy transmission between the super-capacitor and the lithium battery, and is a core component of charge and discharge control of the energy storage power pack. The super-capacitor, the lithium battery and a locomotive network control system communicate with the DC/DC converter through a CAN bus respectively. The DC/DC converter determines, according to the set operating mode execution condition, whether the voltage of the super-capacitor is converted into the voltage of the lithium battery to charge the lithium battery, or the voltage of the lithium battery is converted into the voltage of the super-capacitor to power other load equipment on the locomotive as a power supply source.

The hybrid power system has two power supply modes, namely a grid mode and an energy storage power pack mode. When a grid supplies power to a locomotive traction system, the contactor =11-K01 is closed, the high-speed circuit breaker is closed, and the contactor =11-K02 is opened. When the energy storage power pack supplies power to the locomotive traction system, the contactor =11-K02 is closed, the contactors =11-K01 and =11-K03 are opened, and the high-speed circuit breaker is closed. The anti-reverse diode =11-V01 functions to ensure that the grid branch is turned on forward, and the regenerative braking energy is absorbed by the energy storage power pack. The grid branch can charge the energy storage power pack through the charger.

### 1) Grid mode

When the locomotive is in the grid mode, grid current enters a locomotive intermediate DC circuit through the main transformer and the rectifier, at this time, the contactor =11-K01 is closed, the high-speed circuit breaker is closed, the contactor =11-K02 is opened, the current is inverted by the traction converter into three-phase alternating current, and the alternating current is supplied to the traction motor. At the same time, the contactor =11-K03 is closed, the auxiliary inverter charges the energy storage power pack through the charger, and the auxiliary inverter supplies power to each auxiliary load. At this time, the charger charges the super-capacitor, and the super-capacitor charges the lithium battery through the DC/DC converter.

When the locomotive is in a regenerative braking state, the feedback energy generated by the traction motor is charged to the energy storage power pack through the traction converter, the auxiliary inverter and the charger, and the feedback energy is supplied to the auxiliary loads through the auxiliary inverter.

### 2) Energy storage power pack mode

When the locomotive is in the energy storage power pack mode, the contactor =11-K02 is closed, the contactors =11-K01 and =11-K03 are opened, the high-speed circuit breaker is closed, and the energy storage power pack supplies power to the traction converter through the high-speed circuit breaker, and supplies power to the auxiliary inverter at the same time. When the locomotive is driven by low power, only the lithium battery outputs energy. At this time, the super-capacitor is used to stabilize the voltage of the DC bus. When the power of the locomotive increases, the super-capacitor and the lithium battery are discharged together.

When the locomotive is in the regenerative braking state, the feedback energy generated by the traction motor is charged to the energy storage power pack through the traction converter, the auxiliary inverter and the charger, and the feedback energy is supplied to the auxiliary loads through the auxiliary inverter.

## Claims

1. A rail transit hybrid power circuit, wherein the rail transit hybrid power circuit comprises a lithium battery and a grid branch; the lithium battery is connected to a super-capacitor through a boost/buck module; an output end of the super-capacitor is connected to a charging branch and a first contactor; the first contactor and the charging branch are both connected to a load; and the grid branch is connected to the load through a second contactor.

2. The rail transit hybrid power circuit according to claim 1, wherein the grid branch comprises a grid; the grid is connected to a rectifier through a main transformer; and the rectifier is connected to the second contactor.

3. The rail transit hybrid power circuit according to claim 2, wherein the load comprises a traction converter and a traction motor connected in series; the second contactor is connected to the traction converter through a high-speed circuit breaker; and an output side of the first contactor is connected between the second contactor and the high-speed circuit breaker.

4. The rail transit hybrid power circuit according to claim 2, wherein the second contactor is connected to the rectifier through a diode.

5. The rail transit hybrid power circuit according to claim 3, wherein the charging branch comprises a third contactor; the third contactor is connected to a charger; the charger is connected to an auxiliary inverter; and an output end of the auxiliary inverter is connected between an output side of the high-speed circuit breaker and the traction converter.

6. The rail transit hybrid power circuit according to any one of claims 1-5, wherein the boost/buck module is a DC/DC converter.

7. The rail transit hybrid power circuit according to any one of claims 1-5, wherein the super-capacitor is connected to the charging branch and the first contactor through a DC bus.

8. An energy storage power pack, wherein the energy storage power pack comprises a lithium battery, the lithium battery is connected to a super-capacitor through a DC/DC converter.

9. A power supply method for the rail transit hybrid power circuit according to claim 6 or 7, wherein the power supply method comprises a grid mode and an energy storage power pack mode:
in the grid mode: grid current enters a locomotive intermediate DC circuit through a main transformer and a rectifier, the second contactor and a high-speed circuit breaker are closed, the first contactor is opened, the grid current is inverted by a traction converter into three-phase alternating current, and the alternating current is supplied to a traction motor; at the same time, a third contactor is closed, an auxiliary inverter charges an energy storage power pack through a charger, the auxiliary inverter supplies power to each auxiliary load, the charger charges the super-capacitor, and the super-capacitor charges the lithium battery through a DC/DC converter; and when the locomotive is in a regenerative braking state, the feedback energy generated by the traction motor is charged to the energy storage power pack through the traction converter, the auxiliary inverter and the charger, and the feedback energy is supplied to the auxiliary loads through the auxiliary inverter;
in the energy storage power pack mode: the first contactor is closed, the second contactor and the third contactor are opened, the high-speed circuit breaker is closed, and the energy storage power pack supplies power to the traction converter through the high-speed circuit breaker, and supplies power to the auxiliary inverter at the same time; when the locomotive is driven by low power, only the lithium battery outputs energy, and the super-capacitor is used to stabilize the voltage of a DC bus; when the power of the locomotive increases, the super-capacitor and the lithium battery are discharged together; and when the locomotive is in the regenerative braking state, the feedback energy generated by the traction motor is charged to the energy storage power pack through the traction converter, the auxiliary inverter and the charger, and the feedback energy is supplied to the auxiliary loads through the auxiliary inverter.

10. The method according to claim 9, wherein the low power of the locomotive indicates that the power of the locomotive is less than 100 kw.
